# EUROPÄISCHE PATENTSCHRIFT

(11) **EP 3 215 643 B1**
(45) Veröffentlichungstag und Bekanntmachung des Hinweises auf die Patenterteilung: **07.04.2021**
(21) Anmeldenummer: 15790862.5
(22) Anmeldetag: 23.10.2015
(51) Int. Cl.: C21D 11/00, B21B 37/74, C21D 8/02

(54) **VERFAHREN ZUM STEUERN UND/ODER REGELN EINER METALLURGISCHEN ANLAGE**
METHOD FOR CONTROLLING A METALLURGICAL PLANT IN AN OPEN-LOOP AND/OR CLOSED-LOOP MANNER
PROCÉDÉ DE COMMANDE ET/OU DE RÉGULATION D'UN DISPOSITIF MÉTALLURGIQUE

(30) Priorität: 07.11.2014 DE 102014222827
(43) Veröffentlichungstag der Anmeldung: 13.09.2017
(73) Patentinhaber: SMS group GmbH, 40237 Düsseldorf (DE)
(72) Erfinder: GUSAROVA, Tamara, 41812 Erkelenz (DE); SCHULZE, Stephan, 40668 Meerbusch (DE); SCHUSTER, Ingo, 47877 Willich (DE)
(74) Vertreter: Kross, Ulrich
(86) Internationale Anmeldenummer: PCT/EP2015/074682
(87) Internationale Veröffentlichungsnummer: WO 2016/071132

(56) Entgegenhaltungen:
- EP-A1- 2 656 932
- WO-A1-2004/050923
- DE-A1-102006 047 718
- JP-A- 2009 148 797

## Beschreibung

Die Erfindung betrifft ein Verfahren und ein System zum Steuern und/oder Regeln einer metallurgischen Anlage.

Mit dem Fortschritt in Technologie und Technik werden immer höhere Ansprüche an die jeweilig eingesetzten Stahlsorten gestellt. Um diesen Ansprüchen gerecht zu werden, werden bei der Stahlherstellung Rechenmodelle eingesetzt, die es erlauben, hochtechnologische Prozesse, wie beispielsweise das Walzen von Metallprodukten, nach bestimmten vordefinierten Plänen ablaufen zu lassen, um die mechanischen Eigenschaften eines fertigen Endproduktes erheblich zu verbessern. Die Start- und Endpunkte einzelner Prozessschritte hängen dabei maßgeblich von in dem zu verarbeitenden Material ablaufenden Mikrostrukturänderungen ab.

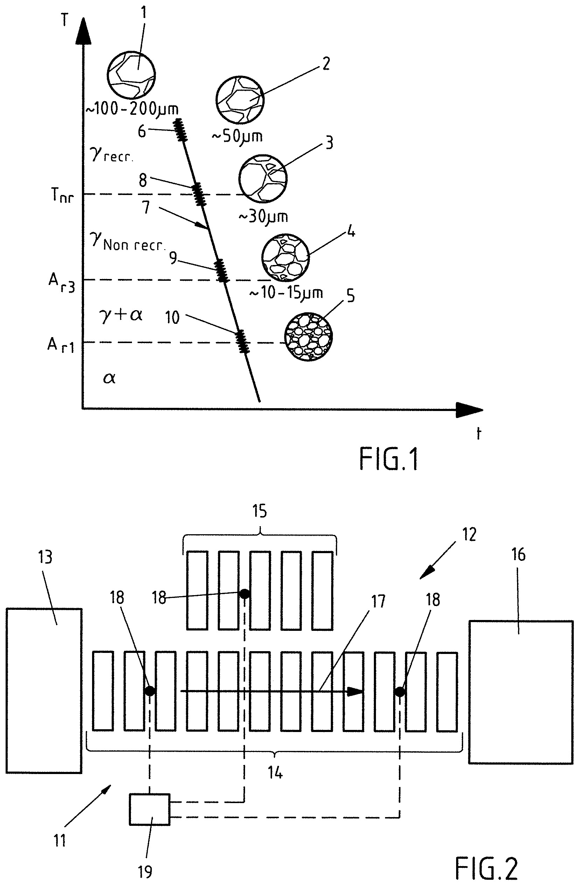

Die in einem zu verarbeitenden Material ablaufenden Mikrostrukturänderungen werden beispielhaft anhand Figur 1 verdeutlicht, die einen thermomechanischen Walzprozess eines Stahlbleches und damit einhergehende Mikrostrukturänderungen beispielhaft verdeutlicht.

Der in Figur 1 gezeigte Walzprozess läuft in mehreren Phasen ab, zwischen denen eine zuvor in einem Ofen wiedererwärmte Bramme abkühlen muss. Nach einer ersten Walzphase bzw. einem ersten thermomechanischen Walzvorgang bei hohen Temperaturen rekristallisiert das Metallgefüge bzw. der Austenit. Anschließend erfolgt eine schnelle Kornvergröberung. Diese erste Walzphase dient üblicherweise dem Zweck der Formgebung. Nach einer darauffolgenden weiteren Walzphase bzw. einem weiteren thermomechanischen Walzvorgang bei niedrigeren Temperaturen rekristallisiert das Metallgefüge bzw. der Austenit zu einem feineren Korn. Eine anschließende Kornvergröberung wird dank der niedrigeren Temperaturen stark verlangsamt.

Die entscheidende Umformung geschieht in einem Temperaturbereich zwischen den Temperaturen Tₙᵣ und Aᵣ₃. Hierbei ist Tₙᵣ die Temperatur, unterhalb der die Rekristallisation stark verzögert ist, und Aᵣ₃ die Temperatur, bei der die Bildung von Ferrit einsetzt. Da das Material in diesem Temperaturbereich nicht mehr dynamisch rekristallisieren kann, kann die Verformungswirkung mehrerer Walzstiche akkumuliert werden, ohne dass das Metallgefüge sich erholt. Es entstehen stark gestreckte und "Pfannkuchen-artig" ausgewalzte Austenitkörner, die viele Keime für eine Ferrit-Bildung aufweisen (auch "Pancaking" genannt). Bei der anschließenden Abkühlung unter die Temperatur Aᵣ₃ bildet sich deswegen ein äußerst feines Ferrit-Metallgefüge.

Der Temperaturbereich zwischen den Temperaturen Tₙᵣ und Aᵣ₃ ist relativ klein. Um diesen Temperaturbereich beim thermomechanischen Walzen zuverlässig treffen zu können, kann er herkömmlich durch Zulegieren, beispielsweise von Niob, erweitert werden. Die große Auswahl an verschiedenen Legierungselementen, die den Temperaturbereich zwischen den Temperaturen Tₙᵣ und Aᵣ₃ beeinflussen, und üblicherweise auftretende Schwankungen im Prozess lassen keine exakte Bestimmung von Strukturänderungszeitpunkten zu und verursachen dadurch teilweise große Unsicherheiten bei der Einstellung der mechanischen Eigenschaften des fertigen Endproduktes.

Das gleiche gilt auch für den Temperaturbereich unterhalb der Temperatur Aᵣ₃. Bei mehrphasigen Walzprozessen muss vermieden werden, dass der Austenit beim Halten zwischen einzelnen Walzphasen zu einem Gefüge mit gemischten Korngrößen teilkristallisiert. Ein solches ungewünschtes Mischgefüge kann in folgenden Walzphasen nicht mehr vollständig eliminiert werden und führt zu niedrigen Zähigkeitseigenschaften des fertigen Endproduktes. Des Weiteren kann ein Walzen in diesem niedrigen Temperaturbereich zu einem groben Ferritkorn mit schlechtem Bruchverhalten führen, da Ferrit bei relativ niedrigen Temperaturen rekristallisiert. Der Effekt einer thermomechanischen Behandlung eines Walzproduktes würde hierdurch zunichte gemacht werden. Deswegen, und falls ein Verfestigungswalzen mit Ferrit-Deformation (auch "festigkeitssteigernde Kaltverformung" genannt) gewünscht ist, wird die niedrigste zulässige Walztemperatur herkömmlich durch die Kantentemperatur des Metallproduktes festgelegt.

Oft findet im Anschluss an einen mehrphasigen Walzprozess zur weitergehenderen Kornverfeinerung und zur Erzeugung festigkeitssteigernder Gefügephasen, wie beispielsweise Bainit und Martensit, eine beschleunigte Abkühlung des Walzproduktes statt. Dabei ist es ebenso wichtig, den Kühlstartpunkt genau zu treffen, wobei die Kühlung am besten exakt nach einhundertprozentiger Rekristallisation beginnen sollte, noch bevor das Austenitkorn wieder zu wachsen beginnt.

Aus dem Vorhergehenden folgt, dass eine genaue Messung von Start- und Endzeitpunkten solcher Mikrostrukturänderungen, wie Rekristallisation und Umwandlung, sowie von Anteilen an den entsprechenden noch nicht veränderten bzw. bereits veränderten Gefügestrukturen, wie beispielsweise Restaustenit, und eventuell auch von Korngrößen von einer herausragenden Bedeutung für eine Walzprozessoptimierung ist.

Aus WO 2004/050923 A1 ist ein Verfahren zur Prozesssteuerung oder Prozessregelung einer metallurgischen Anlage zur Umformung, Kühlung und/oder Wärmebehandlung bekannt, dem ein Verfahrensmodell zugrunde liegt. Es wird online ein für das Metallgefüge des zu verarbeitenden Metallproduktes aussagekräftiger Wert erfasst, anhand dessen eine dynamische online-Adaption des Verfahrensmodells, beispielsweise des Stichplanmodells oder des Kühlstreckenmodells, durchgeführt wird.

Aufgabe der vorliegenden Erfindung ist es, eine einfache, robuste und kostengünstige Steuerung und/oder Regelung einer metallurgischen Anlage zu ermöglichen.

Diese Aufgabe wird durch die unabhängigen Ansprüche gelöst. Vorteilhafte Ausgestaltungen sind insbesondere in den abhängigen Ansprüchen angegeben, die jeweils für sich genommen oder in verschiedener Kombination miteinander einen Aspekt der Erfindung darstellen können.

Das erfindungsgemäße Verfahren zum Steuern und/oder Regeln einer metallurgischen Anlage umfasst die Schritte:
- Erfassen eines Metallgefüges eines Metallproduktes nach Durchführung eines Verarbeitungsschritts an dem Metallprodukt mittels der Anlage;
- Erzeugen von wenigstens einer das jeweilig erfasste Metallgefüge kennzeichnenden Gefügekennzeichnung;
- Vergleichen der jeweilig erzeugten Gefügekennzeichnung mit wenigstens einem vorgegebenen Grenzkriterium; und
- Durchführen eines auf den Verarbeitungsschritt folgenden weiteren Verarbeitungsschritts an dem Metallprodukt mittels der Anlage ausschließlich dann, wenn die jeweilig erzeugte Gefügekennzeichnung das vorgegebene Grenzkriterium erfüllt.

Erfindungsgemäß wird ein zu verarbeitendes Metallprodukt erst dann einem weiteren Verarbeitungsschritt zugeführt, wenn das Metallgefüge des Metallproduktes optimal zur Durchführung des weiteren Verarbeitungsschritts ist bzw. unter Berücksichtigung von, insbesondere fest, vorgegebenen Parametern des weiteren Verfahrensschritts zu gewünschten Eigenschaften des Metallproduktes nach Durchführung des weiteren Verarbeitungsschritts führt. Es ist somit nicht wie bei WO 2004/050923 A1 erforderlich, ein Verfahrensmodell online dynamisch an das jeweilig vorliegende Metallgefüge anzupassen. Es muss also erfindungsgemäß keine Nachkorrektur eines Verfahrensmodells vorgenommen werden. Stattdessen kann ein gegebenes Verfahrensmodell unverändert beibehalten werden. Theoretisch könnte ganz ohne ein Verfahrensmodell gewalzt werden. Hierdurch kann im Vergleich zu WO 2004/050923 A1 eine deutlich einfachere, robustere und kostengünstigere Steuerung und/oder Regelung einer metallurgischen Anlage erfolgen.

Das erfindungsgemäße Verfahren kann beispielsweise beim Walzen eines Grobblechs aus einer anspruchsvollen Stahlsorte angewendet werden. Nach dem Walzen kann das Blech vor der Abkühlung angehalten werden, um die Zeit abzuwarten, die das Material benötigt, um sich vollständig umwandeln zu können. Herkömmlich wird eine solche Wartezeit anhand eines vorhandenen Verfahrensmodells vorberechnet, da in der Regel keine Messvorrichtungen oder Messverfahren vorhanden sind. Die herkömmliche Berechnung der Wartezeiten über vorhandene Verfahrensmodelle ist nicht immer zutreffend und muss in der Regel durch dynamische Adaption dem jeweiligen Material des Metallproduktes angepasst werden. Fehler in der Vorausberechnung von Umwandlungsvorgängen würden in diesem Fall zu einer nicht gewünschten Eigenschaftskombination des fertigen Metallproduktes führen. Im Gegensatz dazu ermöglicht das erfindungsgemäße Verfahren eine genaue Bestimmung des Umwandlungszeitintervalls sowie des umgewandelten Gefügeanteils. Somit können die weiteren Verarbeitungsschritte zur richtigen bzw. optimalen Zeit starten, ohne dass eine dynamische Anpassung der den Verarbeitungsschritten zugrundeliegenden Modelle erforderlich ist. Dies führt zu einer wesentlichen Optimierung der Eigenschaften der fertigen Endprodukte sowie zu einer stabileren Produktion.

Besonders vorteilhaft ist die Erfindung bei der Verarbeitung relativ kurzer Bleche, beispielsweise wenn deren Länge kürzer als die zur Abkühlung verwendete Kühlstrecke ist. In einem solchen Fall ist eine herkömmliche Änderung von Kühlstreckenparametern nicht erwünscht und nicht zielführend.

Das Erfassen des Metallgefüges des Metallproduktes nach Durchführung eines Verarbeitungsschritts an dem Metallprodukt mittels der Anlage kann unter Verwendung einer, zwei oder mehrerer Erfassungseinrichtungen erfolgen. Die Erfassung des Metallgefüges ist nicht auf eine spezielle Erfassungsmethode festgelegt. Die Erfassung des Metallgefüges kann zusätzlich zur Überprüfung von Verfahrensmodellen und zur Erhöhung von deren Aussagekraft verwendet werden. Zum Erfassen des Metallgefüges können Parameter wie beispielsweise ein Umwandlungsstartzeitpunkt, ein Umwandlungsendzeitpunkt, ein Restaustenitanteil, eine Korngröße, eine Textur oder dergleichen erfasst werden.

Das Gefügekennzeichen kann ein einzelner Wert, eine Kombination von Werten, eine Funktion oder eine andere das Metallgefüge kennzeichnende Gefügekennzeichnung sein. Es können auch zwei oder mehrere verschiedene Gefügekennzeichnungen zu einem erfassten Metallgefüge erzeugt werden.

Das Grenzkriterium kann entsprechend dem Gefügekennzeichen ein einzelner Wert, eine Kombination von Werten, eine Funktion oder dergleichen sein. Beispielsweise kann das Grenzkriterium durch ein Unterschreiten oder ein Überschreiten eines Grenzkriteriums in Form eines Grenzwertes erfüllt werden. Alternativ kann das Grenzkriterium durch eine Identität oder einen vorgegebenen Ähnlichkeitsgrad zwischen der Gefügekennzeichnung und dem Grenzkriterium erfüllt werden. Das Grenzkriterium kann offline vorgegeben oder vorberechnet sein.

Über den Vergleich der jeweilig erzeugten Gefügekennzeichnung mit dem vorgegebenen Grenzkriterium lässt sich feststellen, ob die Gefügekennzeichnung das vorgegebene Grenzkriterium erfüllt bzw. ob das Metallprodukt dem weiteren Verarbeitungsschritt zugeführt werden kann.

Das Metallprodukt kann eine Bramme, ein Blech oder dergleichen sein. Ein Verarbeitungsschritt kann beispielsweise durch ein Walzen, Abkühlen oder Aufwärmen gegeben sein.

Über das Erfassen des Metallgefüges des Metallproduktes zu verschiedenen Zeiten wird eine Überprüfung bzw. Optimierung eines vorgegebenen Rechenmodells möglich, das üblicherweise zur Durchführung einer Bearbeitung und Verarbeitung von Metallprodukten verwendet wird. Insbesondere kann überprüft werden, ob ein Bearbeitungsstartzeitpunkt eines solchen Rechenmodells optimal gewählt worden ist. Trifft dies nicht zu, kann das Rechenmodell korrigiert bzw. optimiert werden.

Gemäß einer vorteilhaften Ausgestaltung erfolgt die Erfassung des Metallgefüges kontinuierlich oder in vorgegebenen Zeitabständen, bis die jeweilig erzeugte Gefügekennzeichnung das vorgegebene Grenzkriterium erfüllt. Dies ermöglicht eine Überwachung des Metallgefüges, bis dieses einen für den weiteren Verarbeitungsschritt optimalen Zustand aufweist. Eine in vorgegebenen Zeitabständen wiederholte Erfassung des Metallgefüges ist gegenüber einer kontinuierlichen Erfassung des Metallgefüges mit einer reduzierten Datenverarbeitung verbunden. Die Zeitabstände können an den jeweiligen Anwendungsfall angepasst werden. Insbesondere können die Zeitabstände über einen entsprechenden Erfassungszyklus gleich bleiben oder verändert, beispielsweise verkürzt, werden.

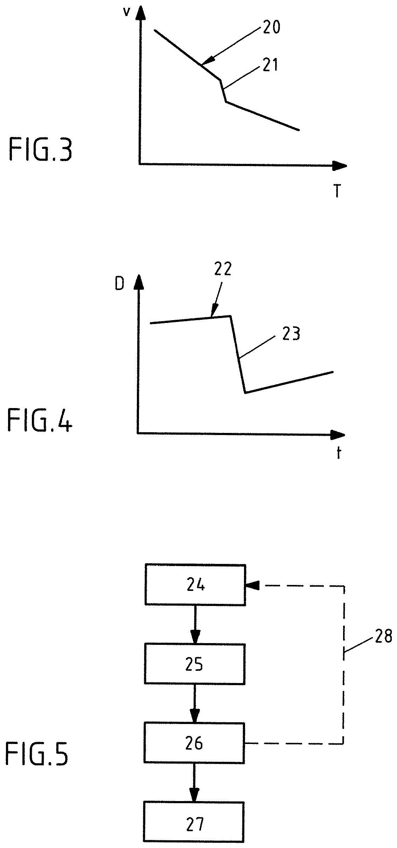

Nach einer weiteren vorteilhaften Ausgestaltung erfolgt die Erfassung des Metallgefüges unter Verwendung von Ultraschall. Eine entsprechende berührungslose Ultraschall-Erfassung kann beispielsweise im Gegensatz zu einer Erfassung unter Verwendung einer Messung einer Restmagnetisierung des Metallproduktes bei beliebigen Produktdicken, beispielsweise bis zu mehreren hundert Millimetern, eingesetzt werden. Zur Ultraschall-Erfassung kann wenigstens ein elektromagnetischer Ultraschallwandler (EMAT) oder ein Laser-Ultraschall-Verfahren (LUS) eingesetzt werden. Eine in dem Metallprodukt ablaufende Änderung des Metallgefüges kann in dem zeitlichen Verlauf und Amplituden vom Ultraschallsignal erfasst werden, da eine Gefügeverfeinerung bei Rekristallisation und eine Kristallgitteränderung bei der Umwandlung entsprechende Änderungen im Verlauf der Ultraschallgeschwindigkeit und der Ultraschalldämpfung hervorrufen, wie es in den Figuren 3 und 4 angedeutet ist. Der Volumenanteil des umgewandelten Gefügeanteils kann ebenfalls aus dem Ultraschallsignal ermittelt werden. Zudem ist eine Korngrößenbestimmung mit Ultraschall möglich.

Eine weitere vorteilhafte Ausgestaltung sieht vor, dass wenigstens ein weiterer Parameter des Metallproduktes erfasst wird. Beispielsweise kann die Temperatur des Metallproduktes, die Dicke des Metallproduktes oder dergleichen erfasst werden. Durch die Berücksichtigung von wenigstens einem weiteren Parameter des Metallproduktes kann die Genauigkeit der erzeugten Gefügekennzeichnung erhöht werden.

Das erfindungsgemäße System zum Steuern und/oder Regeln einer metallurgischen Anlage umfasst
- wenigstens eine Erfassungseinrichtung zum Erfassen eines Metallgefüges eines Metallproduktes nach Durchführung eines Verarbeitungsschritts an dem Metallprodukt mittels der Anlage und
- wenigstens eine kommunikationstechnisch mit der Erfassungseinrichtung verbindbare Steuer- und/oder Regeleinrichtung zum Erzeugen von wenigstens einer das jeweilig erfasste Metallgefüge kennzeichnenden Gefügekennzeichnung,
- wobei die Steuer- und/oder Regeleinrichtung eingerichtet ist, die jeweilig erzeugte Gefügekennzeichnung mit wenigstens einem vorgegebenen Grenzkriterium zu vergleichen; und
- wobei die Steuer- und/oder Regeleinrichtung eingerichtet ist, die Anlage derart zu steuern und/oder zu regeln, dass ein auf den Verarbeitungsschritt folgender weiterer Verarbeitungsschritt an dem Metallprodukt mittels der Anlage ausschließlich dann durchgeführt wird, wenn die jeweilig erzeugte Gefügekennzeichnung das vorgegebene Grenzkriterium erfüllt.

Mit dem System sind die oben mit Bezug auf das Verfahren genannten Vorteile entsprechend verbunden. Die Erfassungseinrichtung kann vor oder nach einem Walzgerüst, in einem Rollgang, auf einem Abstellgleis ("Shuttle") oder in einer Kühlstrecke der metallurgischen Anlage angeordnet sein. Das System kann auch zwei oder mehrere, gleich oder unterschiedlich ausgebildete Erfassungseinrichtungen aufweisen, die an verschiedenen Positionen der metallurgischen Anlage angeordnet sind. Die Steuer und/oder Regeleinrichtung kann durch eine Anlagensteuerung bzw. -regelung ausgebildet oder separat davon angeordnet sein. Die Steuer- und/oder Regeleinrichtung kann zum Vergleichen der Gefügekennzeichnung mit dem Grenzkriterium eine Recheneinheit mit einer Auswertungssoftware und eine Speichereinheit mit dem vorgegebenen Grenzkriterium aufweisen. Eine bestehende metallurgische Anlage kann mit dem System nachgerüstet werden.

Eine vorteilhafte Ausgestaltung sieht vor, dass die Erfassungseinrichtung und die Steuer- und/oder Regeleinrichtung eingerichtet sind, die Erfassung des Metallgefüges kontinuierlich oder in vorgegebenen Zeitabständen durchzuführen, bis die jeweilig erzeugte Gefügekennzeichnung das vorgegebene Grenzkriterium erfüllt. Diese Ausgestaltung ist mit den oben mit Bezug auf die entsprechende Ausgestaltung des Verfahrens verbundenen Vorteilen entsprechend verbunden.

Gemäß einer weiteren vorteilhaften Ausgestaltung umfasst die Erfassungseinrichtung wenigstens einen Ultraschallsensor, insbesondere einen elektromagnetischen Ultraschallsensor (EMAT, EMUS). Diese Ausgestaltung ist mit den oben mit Bezug auf die entsprechende Ausgestaltung des Verfahrens verbundenen Vorteilen entsprechend verbunden.

Vorteilhafterweise ist die Erfassungseinrichtung zur Durchführung einer Laser-Ultraschall-Methode eingerichtet.

Gemäß einer weiteren vorteilhaften Ausgestaltung umfasst das System wenigstens eine kommunikationstechnisch mit der Steuer- und/oder Regeleinrichtung verbindbare Sensoreinheit zum Erfassen von wenigstens einem weiteren Parameter des Metallproduktes. Mit dieser Ausgestaltung sind die oben mit Bezug auf die entsprechende Ausgestaltung des Verfahrens genannten Vorteile entsprechend verbunden. Die Sensoreinheit kann beispielsweise als Pyrometer oder dergleichen ausgebildet sein.

Im Folgenden wird die Erfindung unter Bezugnahme auf die anliegenden Figuren anhand von bevorzugten Ausführungsbeispielen beispielhaft erläutert, wobei die nachfolgend dargestellten Merkmale sowohl jeweils für sich genommen als auch in verschiedener Kombination miteinander einen Aspekt der Erfindung darstellen können. Es zeigen
- Figur 1:: ein Diagramm zu einem beispielhaften thermomechanischen Walzprozess,
- Figur 2:: eine schematische Darstellung eines Ausführungsbeispiels für ein erfindungsgemäßes System,
- Figur 3:: ein Diagramm zur Änderung der Ultraschallgeschwindigkeit bei Temperaturänderung,
- Figur 4:: ein Diagramm zur Änderung der Ultraschalldämpfung über die Zeit und
- Figur 5:: eine schematische Darstellung eines Ausführungsbeispiels für ein erfindungsgemäßes Verfahren.

Figur 1 zeigt ein Diagramm zu einem beispielhaften mehrphasigen, thermomechanischen Walzprozess. In Figur 1 sind fünf Teildarstellungen 1 bis 5 bezüglich des jeweilig bei verschiedenen Temperaturen und Zeiten vorliegenden Metallgefüges gezeigt. Teildarstellung 1 zeigt ein Metallgefüge, wie es nach einem Wiedererwärmen eines Stahlblechs gegeben sein kann. In dem Metallgefüge liegt Austenit (y-Eisen) mit einer Korngröße von etwa 100 bis 200 µm vor. Nach Durchführung eines durch den geschlängelten Abschnitt 6 der Kurve 7 angedeuteten thermomechanischen Walzvorgangs bei hohen Temperaturen über der Temperatur Tₙᵣ rekristallisiert der Austenit. In dem Metallgefüge liegt dann entsprechend der Teildarstellung 2 Austenit mit einer Korngröße von etwa 50 µm vor. Nach Durchführung eines durch den geschlängelten Abschnitt 8 der Kurve 7 angedeuteten weiteren thermomechanischen Walzvorgangs bei niedrigeren Temperaturen um die Temperatur Tₙᵣ rekristallisiert das Austenit bzw. Metallgefüge zu einem feinen Korn mit einer Korngröße von etwa 30 µm, wie es in Teildarstellung 3 gezeigt ist. Nach Durchführung eines durch den geschlängelten Abschnitt 9 der Kurve 7 angedeuteten weiteren thermomechanischen Walzvorgangs bei noch niedrigeren Temperaturen um die Temperatur Aᵣ₃ entstehen "Pfannkuchen-artig" ausgewalzte Austenitkörner, wie sie in der Teildarstellung 4 gezeigt sind und die viele Keime für eine α-Ferrit-Bildung aufweisen. Die Korngröße liegt hierbei in einem Bereich von etwa 10 bis 15 µm. Nach Durchführung eines durch den geschlängelten Abschnitt 10 der Kurve 7 angedeuteten weiteren thermomechanischen Walzvorgangs bei noch niedrigeren Temperaturen um die Temperatur Aᵣ₁ entsteht ein noch feineres Korn im Metallgefüge, wie es in der Teildarstellung 5 gezeigt ist. Oberhalb der Temperatur Tₙᵣ findet eine Rekristallisation des Austenits statt. Zwischen den Temperaturen Aᵣ₃ und Tₙᵣ wird die Rekristallisation des Austenits stark abgebremst, was einer Kornvergröberung entgegenwirkt. Zwischen den Temperaturen Aᵣ₁ und Aᵣ₃ liegt ein Gemisch aus Austenit und α-Ferrit vor. Unterhalb der Temperatur Aᵣ₁ liegt in dem Metallgefüge nur noch α-Ferrit vor.

Figur 2 zeigt eine schematische Darstellung eines Ausführungsbeispiels für ein erfindungsgemäßes System 11 zum Steuern und/oder Regeln einer metallurgischen Anlage 12. Von der metallurgischen Anlage 12 sind ein Walzgerüst 13, ein Rollgang 14, ein Abstellgleis 15 und eine Kühlstrecke 16 gezeigt. Die Bewegungsrichtung eines zu verarbeitenden, nicht gezeigten Metallproduktes ist durch den Pfeil 17 angedeutet.

Das System 11 umfasst wenigstens eine Erfassungseinrichtung 18 zum Erfassen eines Metallgefüges des Metallproduktes nach Durchführung eines Verarbeitungsschritts an dem Metallprodukt mittels des Walzgerüsts 13 der Anlage 12. In Figur 2 sind drei mögliche Positionen gezeigt, an denen jeweils eine Erfassungseinrichtung 18 angeordnet sein kann. Es kann auch nur lediglich eine Erfassungseinrichtung 18 vorhanden sein, die an einem der gezeigten Positionen angeordnet ist.

Das System 11 umfasst des Weiteren eine kommunikationstechnisch mit der wenigstens einen Erfassungseinrichtung 18 verbundene Steuer- und/oder Regeleinrichtung 19 zum Erzeugen von wenigstens einer das jeweilig erfasste Metallgefüge kennzeichnenden Gefügekennzeichnung. Die Steuer- und/oder Regeleinrichtung 19 ist eingerichtet, die jeweilig erzeugte Gefügekennzeichnung mit wenigstens einem vorgegebenen Grenzkriterium zu vergleichen. Zudem ist die Steuer- und/oder Regeleinrichtung 19 eingerichtet, die Anlage 12 derart zu steuern und/oder zu regeln, dass ein auf den mit dem Walzgerüst 13 durchgeführten Verarbeitungsschritt folgender weiterer Verarbeitungsschritt an dem Metallprodukt mittels der Kühlstrecke 16 der Anlage 12 ausschließlich dann durchgeführt wird, wenn die jeweilig erzeugte Gefügekennzeichnung das vorgegebene Grenzkriterium erfüllt.

Die wenigstens eine Erfassungseinrichtung 18 und die Steuer- und/oder Regeleinrichtung 19 sind eingerichtet, die Erfassung des Metallgefüges kontinuierlich oder in vorgegebenen Zeitabständen durchzuführen, bis die jeweilig erzeugte Gefügekennzeichnung das vorgegebene Grenzkriterium erfüllt. Die Erfassungseinrichtung 18 umfasst wenigstens einen nicht gezeigten Ultraschallsensor und kann zur Durchführung einer Laser-Ultraschall-Methode eingerichtet sein.

Figur 3 zeigt ein Diagramm zur Änderung der Ultraschallgeschwindigkeit v bei Temperaturänderung, wobei die Geschwindigkeit v des Ultraschalls gegen die Temperatur T aufgetragen ist. Die Kurve 20 zeigt die Abhängigkeit der Geschwindigkeit v von der Temperatur T, wobei die Geschwindigkeit v mit fallender Temperatur T ansteigt. Die Kurve 20 umfasst einen Abschnitt 21, der die Umwandlung des Austenits zu α-Ferrit betrifft.

Figur 4 zeigt ein Diagramm zur Änderung der Ultraschalldämpfung D über die Zeit t. Die Kurve 22 zeigt die Abhängigkeit der Dämpfung D von der Zeit t. Die Kurve 22 umfasst einen Abschnitt 23, der den Abfall der Dämpfung D bei der Rekristallisation des Austenits bzw. der damit einhergehenden Kornverfeinerung betrifft.

Figur 5 zeigt eine schematische Darstellung eines Ausführungsbeispiels für ein erfindungsgemäßes Verfahren zum Steuern und/oder Regeln einer metallurgischen Anlage. In Schritt 24 wird ein Metallgefüge eines Metallproduktes nach Durchführung eines Verarbeitungsschritts an dem Metallprodukt mittels der Anlage erfasst. In Schritt 25 wird aus dem jeweilig erfassten Metallgefüge wenigstens eine das jeweilig erfasste Metallgefüge kennzeichnende Gefügekennzeichnung erzeugt. In Schritt 26 wird die jeweilig erzeugte Gefügekennzeichnung mit wenigstens einem vorgegebenen Grenzkriterium verglichen. Erfüllt die jeweilig erzeugte Gefügekennzeichnung das vorgegebene Grenzkriterium, wird ein auf den Verarbeitungsschritt folgender weiterer Verarbeitungsschritt 27 an dem Metallprodukt mittels der Anlage durchgeführt.

Erfüllt die jeweilig erzeugte Gefügekennzeichnung das vorgegebene Grenzkriterium nicht, wird gemäß dem Pfeil 28 wieder zu Schritt 24 übergegangen. Diese Vorgehensweise wird fortgeführt, bis die jeweilig erzeugte Gefügekennzeichnung das vorgegebene Grenzkriterium erfüllt.

### Bezugszeichenliste

- 1: Teildarstellung
- 2: Teildarstellung
- 3: Teildarstellung
- 4: Teildarstellung
- 5: Teildarstellung
- 6: Abschnitt
- 7: Kurve
- 8: Abschnitt
- 9: Abschnitt
- 10: Abschnitt
- 11: System
- 12: Anlage
- 13: Walzgerüst
- 14: Rollgang
- 15: Abstellgleis
- 16: Kühlstrecke
- 17: Pfeil
- 18: Erfassungseinrichtung
- 19: Steuer- und/oder Regeleinrichtung
- 20: Kurve
- 21: Abschnitt
- 22: Kurve
- 23: Abschnitt
- 24: Schritt
- 25: Schritt
- 26: Schritt
- 27: Verarbeitungsschritt
- 28: Pfeil

## Patentansprüche

1. Verfahren zum Steuern und/oder Regeln einer metallurgischen Anlage (12), aufweisend die Schritte:
- Erfassen eines Metallgefüges eines Metallproduktes nach Durchführung eines Verarbeitungsschritts an dem Metallprodukt mittels der Anlage (12);
- Erzeugen von wenigstens einer das jeweilig erfasste Metallgefüge kennzeichnenden Gefügekennzeichnung;
- Vergleichen der jeweilig erzeugten Gefügekennzeichnung mit wenigstens einem vorgegebenen Grenzkriterium; und
- Durchführen eines auf den Verarbeitungsschritt folgenden weiteren Verarbeitungsschritts (27) an dem Metallprodukt mittels der Anlage (12) ausschließlich dann, wenn die jeweilig erzeugte Gefügekennzeichnung das vorgegebene Grenzkriterium erfüllt.

2. Verfahren nach Anspruch 1, **dadurch gekennzeichnet, dass** die Erfassung des Metallgefüges kontinuierlich oder in vorgegebenen Zeitabständen erfolgt, bis die jeweilig erzeugte Gefügekennzeichnung das vorgegebene Grenzkriterium erfüllt.

3. Verfahren nach Anspruch 1 oder 2, **dadurch gekennzeichnet, dass** die Erfassung des Metallgefüges unter Verwendung von Ultraschall erfolgt.

4. Verfahren nach einem der Ansprüche 1 bis 3, **dadurch gekennzeichnet, dass** wenigstens ein weiterer Parameter des Metallproduktes erfasst wird.

5. System (11) zum Steuern und/oder Regeln einer metallurgischen Anlage (12), aufweisend
- wenigstens eine Erfassungseinrichtung (18) zum Erfassen eines Metallgefüges eines Metallproduktes nach Durchführung eines Verarbeitungsschritts an dem Metallprodukt mittels der Anlage (12) und
- wenigstens eine kommunikationstechnisch mit der Erfassungseinrichtung (18) verbindbare Steuer- und/oder Regeleinrichtung (19) zum Erzeugen von wenigstens einer das jeweilig erfasste Metallgefüge kennzeichnenden Gefügekennzeichnung,
- wobei die Steuer- und/oder Regeleinrichtung (19) eingerichtet ist, die jeweilig erzeugte Gefügekennzeichnung mit wenigstens einem vorgegebenen Grenzkriterium zu vergleichen; und
- wobei die Steuer- und/oder Regeleinrichtung (19) eingerichtet ist, die Anlage (12) derart zu steuern und/oder zu regeln, dass ein auf den Verarbeitungsschritt folgender weiterer Verarbeitungsschritt (27) an dem Metallprodukt mittels der Anlage (12) ausschließlich dann durchgeführt wird, wenn die jeweilig erzeugte Gefügekennzeichnung das vorgegebene Grenzkriterium erfüllt.

6. System (11) nach Anspruch 5, **dadurch gekennzeichnet, dass** die Erfassungseinrichtung (18) und die Steuer- und/oder Regeleinrichtung (19) eingerichtet sind, die Erfassung des Metallgefüges kontinuierlich oder in vorgegebenen Zeitabständen durchzuführen, bis die jeweilig erzeugte Gefügekennzeichnung das vorgegebene Grenzkriterium erfüllt.

7. System (11) nach Anspruch 5 oder 6, **dadurch gekennzeichnet, dass** die Erfassungseinrichtung (18) wenigstens einen Ultraschallsensor, insbesondere einen elektromagnetischen Ultraschallsensor, aufweist.

8. System (11) nach Anspruch 7, **dadurch gekennzeichnet, dass** die Erfassungseinrichtung (18) zur Durchführung einer Laser-Ultraschall-Methode eingerichtet ist.

9. System (11) nach einem der Ansprüche 5 bis 8, **gekennzeichnet durch** wenigstens eine kommunikationstechnisch mit der Steuer- und/oder Regeleinrichtung (19) verbindbare Sensoreinheit zum Erfassen von wenigstens einem weiteren Parameter des Metallproduktes.

## Claims

1. Method of controlling and/or regulating a metallurgical plant (12), comprising the steps:
- detecting a metal structure of a metal product after performance of a processing step on the metal product by means of the plant (12);
- producing at least one structure characterisation characterising the respective detected metal structure;
- comparing the respective produced structure characterisation with at least one predetermined boundary criterion; and
- performing a further processing step (27), which follows the processing step, on the metal product by means of the plant (12) exclusively when the respective produced characterisation fulfils the predetermined boundary criterion.

2. Method according to claim 1, **characterised in that** the detection of the metal structure is carried out continuously or at predetermined time intervals until the respective produced structure characterisation fulfils the predetermined boundary criterion.

3. Method according to claim 1 or 2, **characterised in that** the detection of the metal structure is carried out with use of ultrasound.

4. Method according to any one of claims 1 to 3, **characterised in that** at least one further parameter of the metal product is detected.

5. System (11) for controlling and/or regulating a metallurgical plant (12), comprising
- at least one detecting device (18) for detecting a metal structure of a metal product after performance of a processing step on the metal product by means of the plant (12) and
- at least one controlling and/or regulating device (19), which can be placed in communicating connection with the detecting device (18), for producing at least one structure characterisation characterising the respective detected metal structure,
- wherein the controlling and/or regulating device (19) is arranged to compare the respective produced structure characterisation with at least one predetermined boundary criterion; and
- wherein the controlling and/or regulating device (19) is arranged to control and/or regulate the plant (12) in such a way that a further processing step (27), which follows the processing step, on the metal product is carried out by means of the plant (12) exclusively when the respective produced structure characterisation fulfils the predetermined boundary criterion.

6. System (11) according to claim 5, **characterised in that** the detecting device (18) and the controlling and/or regulating device (19) are arranged to perform detection of the metal structure continuously or at predetermined time intervals until the respective produced structure characterisation fulfils the predetermined boundary criterion.

7. System (11) according to claim 5 or 6, **characterised in that** the detecting device (18) comprises at least one ultrasound sensor, particularly an electromagnetic ultrasound sensor.

8. System (11) according to claim 7, **characterised in that** the detecting device (18) is arranged for performance of a laser-ultrasound method.

9. System (11) according to any one of claims 5 to 8, **characterised by** at least one sensor unit, which can be placed in communicating connection with the controlling and/or regulating device (19), for detection of at least one further parameter of the metal product.

## Revendications

1. Procédé destiné à la commande et/ou au réglage d'une installation métallurgique (12) qui présente les étapes dans lesquelles :
- on enregistre une texture métallique d'un produit métallique après la mise en oeuvre d'une étape de traitement visant le produit métallique, au moyen de l'installation (12) ;
- on génère au moins une identification de texture qui caractérise la texture métallique qui a été respectivement enregistrée ;
- on compare l'identification de la texture qui a été respectivement générée à au moins un critère limite prédéfini ; et
- on met en oeuvre une étape de traitement ultérieure (27) qui fait suite à l'étape de traitement, que l'on fait subir au produit métallique au moyen de l'installation (12), de manière exclusive lorsque l'identification de la texture qui a été respectivement générée répond au critère limite qui a été prédéfini.

2. Procédé selon la revendication 1, **caractérisé en ce que** l'enregistrement de la texture métallique a lieu en continu ou à des intervalles de temps prédéfinis, jusqu'à ce que l'identification de texture qui a été respectivement générée réponde au critère limite qui a été prédéfini.

3. Procédé selon la revendication 1 ou 2, **caractérisé en ce que** l'enregistrement de la texture métallique a lieu en utilisant des ultrasons.

4. Procédé selon l'une quelconque des revendications 1 à 3, **caractérisé en ce que** l'on enregistre au moins un paramètre supplémentaire du produit métallique.

5. Système (11) destiné à la commande et/ou au réglage d'une installation métallurgique (12), qui présente :
- au moins un mécanisme d'enregistrement (18) destiné à l'enregistrement d'une texture métallique d'un produit métallique après la mise en oeuvre d'une étape de traitement visant le produit métallique au moyen de l'installation (12) ; et
- au moins un mécanisme de commande et/ou de réglage (19) qui peut être relié par l'intermédiaire d'une technique de communication au mécanisme d'enregistrement (18), destiné à générer au moins une identification de texture qui caractérise la texture métallique qui a été respectivement enregistrée ;
- dans lequel le mécanisme de commande et/ou de réglage (19) est conçu pour comparer l'identification de la texture qui a été respectivement enregistrée à au moins un critère limite qui a été prédéfini ;
- dans lequel le mécanisme de commande et/ou de réglage (19) est conçu pour la commande et/ou le réglage de l'installation (12) d'une manière telle que l'on met en oeuvre une étape de traitement ultérieure (27) qui fait suite à l'étape de traitement, que l'on fait subir au produit métallique au moyen de l'installation (12) de manière exclusive lorsque l'identification de la texture qui a été respectivement générée répond au critère limite qui a été prédéfini.

6. Système (11) selon la revendication 5, **caractérisé en ce que** le mécanisme d'enregistrement (18) et le mécanisme de commande et/ou de réglage (19) sont conçus pour mettre en oeuvre l'enregistrement de la texture métallique en continu ou dans des intervalles qui ont été prédéfinis, jusqu'à ce que l'identification de la texture qui a été respectivement générée répond au critère limite qui a été prédéfini.

7. Système (11) selon la revendication 5 ou 6, **caractérisé en ce que** le mécanisme d'enregistrement (18) présente au moins un capteur du type à ultrasons, en particulier un capteur électromagnétique du type à ultrasons.

8. Système (11) selon la revendication 7, **caractérisé en ce que** le mécanisme d'enregistrement (18) est conçu pour la mise en oeuvre d'un procédé de type à ultrasons faisant appel à un laser.

9. Système (11) selon l'une quelconque des revendications 5 à 8, **caractérisé par** au moins une unité de détection qui peut être reliée par l'intermédiaire d'une technique de communication au mécanisme de commande et/ou de réglage (19), qui est destinée à l'enregistrement d'au moins un paramètre supplémentaire du produit métallique.
